(19) Europäisches Patentamt
European Patent Office
Office européen des brevets

(11) EP 1 104 241 B1

(12) EUROPÄISCHE PATENTSCHRIFT

(45) Veröffentlichungstag und Bekanntmachung des Hinweises auf die Patenterteilung:
**18.06.2003 Patentblatt 2003/25**

(21) Anmeldenummer: **99940185.4**

(22) Anmeldetag: **10.08.1999**

(51) Int Cl.[7]: **A01N 57/20**
// (A01N57/20, 47:36, 47:30, 47:20, 47:06, 43:56, 43:42), A01N33:18

(86) Internationale Anmeldenummer:
**PCT/EP99/05798**

(87) Internationale Veröffentlichungsnummer:
**WO 00/008938 (24.02.2000 Gazette 2000/08)**

# (54) HERBIZIDE MITTEL FÜR TOLERANTE ODER RESISTENTE RAPSKULTUREN

HERBICIDES FOR TOLERANT OR RESISTANT OIL SEED RAPE CULTURES

AGENTS HERBICIDES POUR CULTURES DE COLZA TOLERANTES OU RESISTANTES

(84) Benannte Vertragsstaaten:
**AT BE CH CY DE DK ES FI FR GB GR IE IT LI LU MC NL PT SE**

(30) Priorität: **13.08.1998 DE 19836726**

(43) Veröffentlichungstag der Anmeldung:
**06.06.2001 Patentblatt 2001/23**

(73) Patentinhaber: **Bayer CropScience GmbH**
**65929 Frankfurt/Main (DE)**

(72) Erfinder:
- **HACKER, Erwin**
  **D-65239 Hochheim (DE)**
- **BIERINGER, Hermann**
  **D-65817 Eppstein (DE)**
- **WILLMS, Lothar**
  **D-65719 Hofheim (DE)**

(56) Entgegenhaltungen:
**WO-A-95/05082** **WO-A-97/36488**
**WO-A-98/09525**

- **DATABASE CROPU [Online] Derwent Information Ltd.1997 : "Guideline on good plant protection practice. Rape." retrieved from STN Database accession no. 1997-80081 XP002125462 & BULL.OEPP (26, NO. 2, 349-67, 1996) CODEN: OEPBAO, EPPO**
- **DATABASE CROPU [Online] Derwent International 1992 WEIGL W: "Winter Rape - Plant Protection Tips for Spring. (Winterraps - Pflanzen-Schutztips fuers Fruehjahr)" retrieved from STN Database accession no. 1992-81710 XP002125463 & PFLANZENARZT (45, NO. 1-2, 12-13, 1992) 1 TAB. CODEN: PFLZAQ,**
- **CHEMICAL ABSTRACTS, vol. 123, no. 5, 31. Juli 1995 (1995-07-31) Columbus, Ohio, US; abstract no. 49745, LICHTNER, FRANCIS T. ET AL: "Ethametsulfuron methyl metabolism and crop selectivity in spring oilseed rape (Brassica napus L.)" XP002125461 & PESTIC. BIOCHEM. PHYSIOL. (1995), 52(1), 12-24 ,1995,**
- **C TOMLIN (ED): "The Pesticide Manual, Tenth Edition" , FARNHAM, GB XP002099499 ISBN: 0-948404-79-5 Seite 1335 -Seite 1341**
- **DATABASE CROPU [Online] Derwent Internaional 1995 KIRKLAND K J ET AL: "Weed control in transgenic canola with glyphosate and registered canola herbicides." retrieved from STN Database accession no. 1995-86480 XP002125552 & RES.REP.EXPERT COMM.WEEDS WEST.CAN. (41 MEET., VOL. 1, 242-43, 1994) 1 TAB., Agr.Canada**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung liegt auf dem Gebiet der Pflanzenschutzmittel, die gegen Schadpflanzen in toleranten oder resistenten Kulturen von Raps eingesetzt werden können und als Herbizidwirkstoffe eine Kombination von zwei oder mehreren Herbiziden enthalten.

Mit der Einführung von toleranten oder resistenten Rapssorten und -linien, insbesondere von transgenen Rapssorten und -linien, wird das herkömmliche Unkrautbekämpfungssystem um neue, per se in herkömmlichen Rapssorten nichtselektive Wirkstoffe ergänzt. Die Wirkstoffe sind beispielsweise die bekannte breitwirksame Herbizide wie Glyphosate, Sulfosate, Glufosinate, Bilanafos (= Bialaphos) und Imidazolinon-Herbizide [Herbizide (A)], die nunmehr in den jeweils für sie entwickelten toleranten Kulturen eingesetzt werden können. Die Wirksamkeit dieser Herbizide gegen Schadpflanzen in den toleranten Kulturen liegt auf einem hohen Niveau, hängt jedoch - ähnlich wie bei anderen Herbizidbehandlungen - von der Art des eingesetzten Herbizids, dessen Aufwandmenge, der jeweiligen Zubereitungsform, den jeweils zu bekämpfenden Schadpflanzen, den Klima- und Bodenverhältnissen, etc. ab. Ferner weisen die Herbizide Schwächen (Lücken) gegen spezielle Arten von Schadpflanzen auf. Ein weiteres Kriterium ist die Dauer der Wirkung bzw. die Abbaugeschwindigkeit des Herbizids. Zu berücksichtigen sind gegebenenfalls auch Veränderungen in der Empfindlichkeit von Schadpflanzen, die bei längerer Anwendung der Herbizide oder geographisch begrenzt auftreten können. Wirkungsverluste bei einzelnen Pflanzen lassen sich nur bedingt, wenn überhaupt, durch höhere Aufwandmengen der Herbizide ausgleichen. Außerdem besteht immer Bedarf für Methoden, die Herbizidwirkung mit geringerer Aufwandmenge an Wirkstoffen zu erreichen. Eine geringere Aufwandmenge reduziert nicht nur die für die Applikation erforderliche Menge eines Wirkstoffs, sondern reduziert in der Regel auch die Menge an nötigen Formulierungshilfsmitteln. Beides verringert den wirtschaftlichen Aufwand und verbessert die ökologische Verträglichkeit der Herbizidbehandlung.

Eine Möglichkeit zur Verbesserung des Anwendungsprofils eines Herbizids kann in der Kombination des Wirkstoffs mit einem oder mehreren anderen Wirkstoffen bestehen, welche die gewünschten zusätzlichen Eigenschaften beisteuern. Allerdings treten bei der kombinierten Anwendung mehrerer Wirkstoffe nicht selten Phänomene der physikalischen und biologischen Unverträglichkeit auf, z. B. mangelnde Stabilität einer Coformulierung, Zersetzung eines Wirkstoffes bzw. Antagonismus der Wirkstoffe. Erwünscht dagegen sind Kombinationen von Wirkstoffen mit günstigem Wirkungsprofil, hoher Stabilität und möglichst synergistisch verstärkter Wirkung, welche eine Reduzierung der Aufwandmenge im Vergleich zur Einzelapplikation der zu kombinierenden Wirkstoffe erlaubt.

Überraschenderweise wurde nun gefunden, daß Wirkstoffe aus der Gruppe der genannten breitwirksamen Herbizide (A) in Kombination mit anderen Herbiziden aus der Gruppe (A) und gegebenenfalls bestimmten Herbiziden (B) in besonders günstiger Weise zusammenwirken, wenn sie in den Rapskulturen eingesetzt werden, die für die selektive Anwendung der erstgenannten Herbizide geeignet sind.

Gegenstand der Erfindung ist somit die Verwendung von Herbizid-Kombinationen zur Bekämpfung von Schadpflanzen in Rapskulturen, dadurch gekennzeichnet, daß die jeweilige Herbizid-Kombination einen synergistisch wirksamen Gehalt an

(A) einem breitwirksamen Herbizid aus der Gruppe der Verbindungen, welche aus

(A1) Verbindungen der Formeln (A1),

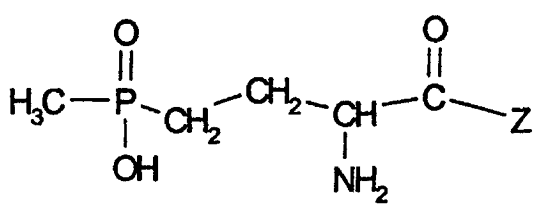

(A1)

worin Z einen Rest der Formel -OH oder einen Peptidrest der Formel $-NHCH(CH_3)CONHCH(CH_3)COOH$ oder $-NHCH(CH_3)CONHCH[CH_2CH(CH_3)_2]COOH$ bedeutet, und deren Estern und Salzen, vorzugsweise Glufosinate und dessen Salzen mit Säuren und Basen, insbesondere Glufosinate-ammonium, L-Glufosinate oder dessen Salzen, Bialaphos und dessen Salzen mit Säuren und Basen, und anderen Phosphinothricin-derivaten,

(A2) Verbindungen der Formel (A2) und deren Estern und Salzen,

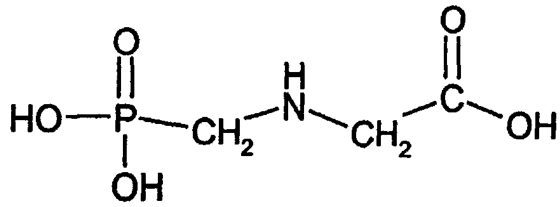

(A2)

vorzugsweise Glyphosate und dessen Alkalimetallsalzen oder Salzen mit Aminen, insbesondere Glyphosate-isopropylammonium, und Sulfosate,

(A3) Imidazolinonen, vorzugsweise Imazethapyr, Imazapyr, Imazamethabenz, Imazamethabenz-methyl, Imazaquin, Imazamox, Imazapic (AC 263,222) und deren Salzen und

(A4) herbiziden Azolen aus der Gruppe der Hemmstoffe der Protoporphyrinogen-oxidase (PPO-Hemmstoffe) und des PPO-Hemmstoffs WC9717 (= CGA276854),

besteht,

und

(B) einem oder mehreren Herbiziden aus der Gruppe der Verbindungen, welche aus

(B0) Herbizide (A) aus der Gruppe der Herbizide (A1) bis (A4), die nicht mit dem der Komponente (A) identisch sind, und/oder

(B1) gegen monokotyle und dikotyle Schadpflanzen wirksamen Herbiziden mit Blattund Bodenwirkung aus der Gruppe Metazachlor, Trifluralin, Clomazone, Napropamide, Carbetamide, Dimefuron und Dimethachlor und/oder

(B2) gegen dikotyle Schadpflanzen wirksamen Herbiziden mit Blattwirkung aus der Gruppe Quinmerac, Clopyralid, Pyridate und Ethametsulfuron-methyl und/oder

(B3) besonders gegen monokotyle Schadpflanzen wirksamen Herbiziden mit Blattwirkung aus der Gruppe Quizalofop-P und dessen Ester, Fenoxaprop-P und dessen Ester, Fluazifop-P und dessen Ester, Haloxyfop und Haloxyfop-P und deren Ester und Propaquizafop und/oder

(B4) gegen monokotyle Schadpflanzen wirksamen Herbiziden mit Blatt- und Bodenwirkung aus der Gruppe Sethoxydim, Cycloxydim und Clethodim

besteht,

aufweist und die Rapskulturen gegenüber den in der Kombination enthaltenen Herbiziden (A) und (B), gegebenenfalls in Gegenwart von Safenern, tolerant sind, ausgenommen die Verwendung von Herbizidkombinationen

a) aus Verbindung (A1) in Kombination mit der Verbindung Propaquizafop,
b) aus einer Verbindung (A2) in Kombination mit der Verbindung Propaquizafop oder Trifluralin.

Mit "strukturell anderen Herbiziden aus der genannten Gruppe (A)" kommen in der Gruppe (B0) nur Herbizide in Frage, die von der Definition der Gruppe (A) umfaßt sind, jedoch in der jeweiligen Herbizid-Kombination nicht als Komponente (A) enthalten sind.

Neben den erfindungsgemäßen Herbizid-Kombinationen können weitere Pflanzenschutzmittelwirkstoffe und im Pflanzenschutz übliche Hilfsstoffe und Formulierungshilfsmittel verwendet werden.

Die synergistischen Wirkungen werden bei gemeinsamer Ausbringung der Wirkstoffe (A) und (B) beobachtet, können jedoch auch bei zeitlich getrennter Anwendung (Splitting) festgestellt werden. Möglich ist auch die Anwendung der Herbizide oder der Herbizid-Kombinationen in mehreren Portionen (Sequenzanwendung), z. B. nach Anwendungen im Vorauflauf, gefolgt von Nachauflauf-Applikationen oder nach frühen Nachauflaufanwendungen, gefolgt von Applikationen im mittleren oder späten Nachauflauf. Bevorzugt ist dabei die simultane Anwendung der Wirkstoffe der jeweiligen Kombination, gegebenenfalls in mehreren Portionen. Aber auch die zeitversetzte Anwendung der Einzelwirkstoffe einer Kombination ist möglich und kann im Einzelfall vorteilhaft sein. In diese Systemanwendung können auch andere Pflanzenschutzmittel wie Fungizide, Insektizide, Akarizide etc, und/oder verschiedene Hilfsstoffe, Adjuvantien und/oder Düngergaben integriert werden.

Die synergistischen Effekte erlauben eine Reduktion der Aufwandmengen der Einzelwirkstoffe, eine höhere

Wirkungsstärke gegenüber derselben Schadpflanzenart bei gleicher Aufwandmenge, die Kontrolle bislang nicht erfasster Arten (Lücken), eine Ausdehnung des Anwendungszeitraums und/oder eine Reduzierung der Anzahl notwendiger Einzelanwendungen und - als Resultat für den Anwender - ökonomisch und ökologisch vorteilhaftere Unkrautbekämpfungssysteme.

Bespielsweise werden durch die erfindungsgemäßen Kombinationen aus (A)+(B) synergistische Wirkungssteigerungen möglich, die weit und in unerwarteter Weise über die Wirkungen hinausgehen, die mit den Einzelwirkstoffen (A) und (B) erreicht werden.

In WO-A-98/09525 ist bereits ein Verfahren zur Bekämpfung von Unkräutern in transgenen Kulturen beschrieben, welche gegenüber phosphorhaltigen Herbiziden wie Glufosinate oder Glyphosate resistent sind, wobei Herbizid-Kombinationen eingesetzt werden, welche Glufosinate oder Glyphosate und mindestens ein Herbizid aus der Gruppe Prosulfuron, Primisulfuron, Dicamba, Pyridate, Dimethenamid, Metolachlor, Flumeturon, Propaquizafop, Atrazin, Clodinafop, Norflurazone, Ametryn, Terbutylazin, Simazin, Prometryn, NOA-402989 (3-Phenyl-4-hydroxy-6-chlorpyridazin), eine Verbindung der Formel,

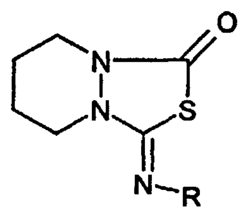

worin R = 4-Chlor-2-fluor-5-(methoxycarbonylmethylthio)-phenyl bedeutet, (bekannt aus US-A-4671819), CGA276854 = 2-Chlor-5-(3-methyl-2,6-dioxo-4-trifluormethyl-3,6-dihydro-2H-pyrimidin-1-yl)-benzoesäure-1-allyloxycarbonyl-1-methylethyl-ester (= WC9717, bekannt aus US-A-5183492) und 2-{N-[N-(4,6-Dimethylpyrimidin-2-yl)-aminocarbonyl]-aminosulfonyl}-benzoesäure-4-oxetanylester (bekannt aus EP-A-496701) enthalten. Einzelheiten über die erzielbaren oder erzielten Effekte gehen aus der Druckschrift WO-A-98/09525 nicht hervor. Beispiele zu synergistischen Effekten oder zur Durchführung des Verfahrens in bestimmten Kulturen fehlen ebenso wie konkrete Kombinationen aus zwei, drei oder weiteren Herbiziden.

Aus DE-A-2856260 sind bereits einige Herbizid-Kombinationen mit Glufosinate oder L-Glufosinate und anderen Herbiziden wie Alloxidim, Linuron, MCPA, 2,4-D, Dicamba, Triclopyr, 2,4,5-T, MCPB und anderen bekannt.
Aus WO-A-92/083 53 und EP-A 0 252 237 sind bereits einige Herbizid-Kombinationen mit Glufosinate oder Glyphosate und anderen Herbiziden aus der Sulfonylharnstoffreihe wie Metsulfuron-methyl, Nicosulfuron, Primisulfuron, Rimsulfuron u.a. bekannt.

Die Anwendung der Kombinationen zur Bekämpfung von Schadpflanzen ist in den Druckschriften nur an wenigen Pflanzenspezies oder aber an keinem Beispiel gezeigt worden.

Aus Res. Rep. Expert Comm.Weeds West.Can. (41. Meet., Vol.1, 242-43 (1994) ist bereits bekannt, bestimmte Herbizide und Herbizidkombinationen, unter anderem die Kombination von Glyphosate und Trifluralin, zur Unkrautbekämpfung in Raps (canola) einzusetzen, der gegenüber Glyphosate tolerant ist.

In eigenen Versuchen wurde gefunden, daß überraschenderweise große Unterschiede zwischen der Verwendbarkeit der in WO-A-98/09525 und den anderen Referenzen erwähnten Herbizid-Kombinationen und auch anderer neuartiger Herbizid-Kombinationen in Pflanzenkulturen bestehen.
Erfindungsgemäß werden Herbizid-Kombinationen bereitgestellt, die in toleranten Rapskulturen besonders günstig eingesetzt werden können.

Die Verbindungen der Formel (A1) bis (A4) sind bekannt oder können analog bekannten Verfahren hergestellt werden.
Die Formel (A1) umfaßt alle Stereoisomeren und deren Gemische, insbesondere das Racemat und das jeweils biologisch wirksame Enantiomere, z. B. L-Glufosinate und dessen Salze. Beispiele für Wirkstoffe der Formel (A1) sind folgende:

- A1.1) Glufosinate im engeren Sinne, d. h. D,L-2-Amino-4-[hydroxy(methyl)phosphinyl]-butansäure,
- (A1.2) Glufosinate-monoammoniumsalz,
- (A1.3) L-Glufosinate, L- oder (2S)-2-Amino-4-[hydroxy(methyl)phosphinyl]-butansäure (= Phosphinothricin),
- (A1.4) L-Glufosinate-monoammoniumsalz,
- (A1.5) Bilanafos (oder Bialaphos), d.h. L-2-Amino-4-[hydroxy(methyl)phosphinyl]-butanoyl-L-alanyl-L-alanin, insbesondere dessen Natriumsalz.

Die genannten Herbizide (A1.1) bis (A1.5) werden über die grünen Teile der Pflanzen aufgenommen und sind

als Breitspektrum-Herbizide oder Totalherbizide bekannt; sie sind Hemmstoffe des Enzyms Glutaminsynthetase in Pflanzen; siehe "The Pesticide Manual" 11th Edition, British Crop Protection Council 1997, S. 643-645 bzw. 120-121. Während ein Einsatzgebiet im Nachauflauf-Verfahren zur Bekämpfung von Unkräutem und Ungräsern in Plantagen-Kulturen und auf Nichtkulturland sowie mittels spezieller Applikationstechniken auch zur Zwischenreihenbekämpfung in landwirtschaftlichen Flächenkulturen wie Mais, Baumwolle u.a. besteht, nimmt die Bedeutung der Verwendung als selektive Herbizide in resistenten transgenen Pflanzenkulturen zu. Glufosinate wird üblicherweise in Form eines Salzes, vorzugsweise des Ammoniumsalzes eingesetzt. Das Racemat von Glufosinate bzw. Glufosinate-ammonium wird alleine üblicherweise in Dosierungen ausgebracht, die zwischen 200 und 2000 g AS/ha (= g a.i./ha = Gramm Aktivsubstanz pro Hektar) liegen. Glufosinate ist in diesen Dosierungen vor allem dann wirksam, wenn es über grüne Pflanzenteile aufgenommen wird. Da es im Boden mikrobiell innerhalb weniger Tage abgebaut wird, hat es keine Dauerwirkung im Boden. Ähnliches gilt auch für den verwandten Wirkstoff Bialaphos-Natrium (auch Bilanafos-Natrium); siehe "The Pesticide Manual" 11th Ed., British Crop Protection Council 1997 S. 120-121.
In den erfindungsgemäßen Kombinationen benötigt man in der Regel deutlich weniger Wirkstoff (A1), beispielsweise eine Aufwandmenge im Bereich von 20 bis 800, vorzugsweise 20 bis 600 Gramm Aktivsubstanz Glufosinate pro Hektar (g AS/ha oder g a.i./ha). Entsprechende Mengen, vorzugsweise in Mol pro Hektar umgerechnete Mengen, gelten auch für Glufosinate-ammonium und Bilanafos bzw. Bilanafos-Natrium.

Die Kombinationen mit den blattwirksamen Herbiziden (A1) werden zweckmäßig in Rapskulturen eingesetzt, die gegenüber den Verbindungen (A1) resistent oder tolerant sind. Einige tolerante Rapskulturen, die gentechnisch erzeugt wurden, sind bereits bekannt und werden in der Praxis eingesetzt; vgl. Artikel in der Zeitschrift "Zuckerrübe" 47. Jahrgang (1998), S. 217 ff.; zur Herstellung transgener Pflanzen, die gegen Glufosinate resistent sind, vgl. EP-A-0242246, EP-A-242236, EP-A-257542, EP-A-275957, EP-A-0513054).

Beispiele für Verbindungen (A2) sind

(A2.1) Glyphosate, d. h. N-(Phosphonomethyl)-glycin,
(A2.2) Glyphosate-monoisopropylammoniumsalz,
(A2.3) Glyphosate-natriumsalz,
(A2.4) Sulfosate, d. h. N-(Phosphonomethyl)-glycin-trimesiumsalz = N-(Phosphonomethyl)-glycin-trimethylsulfoxoniumsalz,

Glyphosate wird üblicherweise in Form eines Salzes, vorzugsweise des Monoisopropylammoniumsalzes oder des Trimethylsulfoxoniumsalzes (=Trimesiumsalzes = Sulfosate) eingesetzt. Bezogen auf die freie Säure Glyphosate liegt die Einzeldosierung üblicherweise im Bereich von 0,5-5 kg AS/ha. Glyphosate ist unter manchen anwendungstechnischen Aspekten dem Glufosinate ähnlich, jedoch ist es im Gegensatz dazu ein Hemmstoff für des Enzyms 5-Enolpyruvylshikimat-3-phosphat-Syntase in Pflanzen; siehe "The Pesticide Manual" 11th Ed., British Crop Protection Council 1997 S. 646-649. In den erfindungsgemäßen Kombinationen benötigt man in der Regel Aufwandmengen im Bereich von 20 bis 2000, vorzugsweise 20 bis 1000, insbesondere 20 bis 800 g AS/ha Glyphosate.

Auch für Verbindungen (A2) sind bereits gentechnisch erzeugte tolerante Pflanzen bekannt und in der Praxis eingeführt worden; vgl. "Zuckerrübe" 47. Jahrgang (1998), S. 217 ff.; vgl. auch WO 92/00377, EP-A-115673, EP-A-409815.

Beispiele für Imidazolinon-Herbizide (A3) sind

(A3.1) Imazapyr und dessen Salze und Ester,
(A3.2) Imazethapyr und dessen Salze und Ester,
(A3.3) Imazamethabenz und dessen Salze und Ester,
(A3.4) Imazamethabenz-methyl,
(A3.5) Imazamox und dessen Salze und Ester,
(A3.6) Imazaquin und dessen Salze und Ester, z. B. das Ammoniumsalz,
(A3.7) Imazapic (AC 263,222) und dessen Salze und Ester, z. B. das Ammoniumsalz.

Die Herbizide hemmen das Enzym Acetolactatsynthase (ALS) und damit die Proteinsynthese in Pflanzen; sie sind sowohl boden- als auch blattwirksam und weisen teilweise Selektivitäten in Kulturen auf; vgl. "The Pesticide Manual" 11th Ed., British Crop Protection Council 1997 S. 697-699 zu (A3.1), S. 701-703 zu (A3.2), S. 694-696 zu

(A3.3) und (A3.4), S. 696-697 zu (A3.5), S. 699-701 zu (A3.6) und S. 5 und 6, referiert unter AC 263,222 (zu A3.7). Die Aufwandmengen der Herbizide sind üblicherweise zwischen 0,001 und 2 kg AS/ha, meist 0,1 bis 2 kg AS/ha; speziell

(A3.1) von 20-400 g AS/ha, vorzugsweise 40-360 g AS/ha,
(A3.2) von 10-200 g AS/ha, vorzugsweise 20-180 g AS/ha,
(A3.3) von 100-2000 g AS/ha, vorzugsweise 150-1800 g AS/ha,
(A3.4) von 100-2000 g AS/ha, vorzugsweise 150-1800 g AS/ha,
(A3.5) von 1-150 g AS/ha, vorzugsweise 2-120 g AS/ha,
(A3.6) von 10-900 g AS/ha, vorzugsweise 20-800 g AS/ha,
(A3.7) von 5-2000 g AS/ha, vorzugsweise 10-1000 g AS/ha.

In den erfindungsgemäßen Kombinationen liegen sie vorzugsweise im Bereich von 1 bis 2000, insbesondere 10 bis 200 g AS/ha.

Die Kombinationen mit Imidazolinonen werden zweckmäßig in Rapskulturen eingesetzt, die gegenüber den Imidazolinonen resistent sind. Derartige tolerante Kulturen sind bereits bekannt. EP-A-0360750 beschreibt z.B. die Herstellung von ALSinhibitor-toleranten Pflanzen durch Selektionsverfahren oder gentechnische Verfahren. Die Herbizid-Toleranz der Pflanzen wird hierbei durch einen erhöhten ALS-Gehalt in den Pflanzen erzeugt. US-A-5,198,599 beschreibt sulfonylharnstoff- und imidazolinontolerante Pflanzen, die durch Selektionsverfahren gewonnen wurden.

Beispiele für PPO-Hemmstoffe (A4) sind

(A4.1) Pyraflufen und dessen Ester wie Pyraflufen-ethyl,
(A4.2) Carfentrazone und dessen Ester wie Carfentrazone-ethyl,
(A4.3) Oxadiargyl,
(A4.4) Sulfentrazone,
(A4.5) WC9717 oder CGA276854 = 2-Chlor-5-(3-methyl-2,6-dioxo-4-trifluormethyl-3,6-dihydro-2H-pyrimidin-1-yl)-benzoesäure-1-allyloxycarbonyl-1-methylethyl-ester (bekannt aus US-A-5183492)

Die genannten Azole sind bekannt als Hemmstoffe des Enzyms Protoporphyrinogenoxidase (PPO) in Pflanzen; siehe "The Pesticide Manual" 11th Ed., British Crop Protection Council 1997 S. 1048-1049 zu (A4.1), S. 191-193 zu (A4.2), S. 904-905 zu (A4.3) und S. 1126-1127 zu (A4.4). Die Aufwandmengen der Azole sind in der Regel im Bereich von 1 bis 2000 g AS/ha, vorzugsweise 2 bis 1500 g AS/ha, insbesondere 5 bis 200 g AS/ha, speziell folgende Aufwandmengen der einzelnen Wirkstoffe:

(A4.1) 1 bis 100, vorzugsweise 2 bis 80 g AS/ha,
(A4.2) 1 bis 500, vorzugsweise 2-250, insbesondere 3-180 g AS/ha,

(A4.3) 10 bis 1000, vorzugsweise 10-600, insbesondere 20-400 g AS/ha,
(A4.4) 10 bis 2000, vorzugsweise 50-1500, insbesondere 70-1000 g AS/ha,
(A4.5) 10 bis 1000 g AS/ha, vorzugsweise 20-800 g AS/ha.

Einige gegenüber PPO-Hemmern tolerante Pflanzenkulturen sind bereits bekannt.

Als Kombinationspartner (B) für die Komponente (A) kommen beispielsweise Verbindungen der Untergruppen (B0) bis (B4) in Frage:

(B0) Im Vergleich zum Herbizid (A) strukturell andere Herbizide (nicht identische), ausgewählt aus der Gruppe der für die Komponente (A) möglichen Herbizide,

(B1) Herbizide, die sowohl blattwirksam als auch bodenwirksam sind und gegen Gräser und Dikotyle eingesetzt werden können, beispielsweise die folgenden Verbindungen (Angabe mit dem "common name" und der Referenzstelle aus "The Pesticide Manual" 11th Ed., British Crop Protection Council 1997, abgekürzt "PM"; im Folgenden sind in Klammern auch bevorzugte Aufwandmengen angegeben):

(B1.1) Metazachlor (PM, S. 801-803), d. h. 2-Chlor-N-(2,6-dimethylphenyl)-N-(1H-pyrazol-1-ylmethyl)-acetanilid, (100-3000 g AS/ha, insbesondere 200-3500 g AS/ha),

(B1.2) Trifluralin (PM, S. 1248-1250), d. h. 2,6-Dinitro-N,N-dipropyl-4-trifluormethyl-anilin, (200-5000 g AS/ha, insbesondere 500-3000 g AS/ha),

(B1.3) Clomazone (PM, S. 256-257), d. h. 2-(2-chlorbenzyl)-4,4-dimethyl-1,2-isoxazolidin-3-on, (100-1000 g AS/ha, insbesondere 20-800 g AS/ha),

(B1.4) Napropamide (PM, S. 866-868), d. h. (R,S)-N,N-Diethyl-2-(1-naphthyloxy)-propanamid, (200-3000 g AS/ha, insbesondere 300-2500 g AS/ha),

(B1.5) Carbetamide (PM, S. 184-185), d. h. (R)-Carbanilinsäure-1-(ethylcarbamoyl)-ethylester, (500-5000 g AS/ha, insbesondere 800-4000 g AS/ha) und

(B1.6) Dimefuron (PM, S. 403-404), d. h.. 3-[4-(5-tert.-Butyl-2,3-dihydro-2-oxo-1,3,4-oxadiazol-3-yl)-3-chlorphenyl]-N, N-dimethylharnstoff; (200-4000 g AS/ha, insbesondere 300-3000 g AS/ha) und gegebenenfalls

(B1.7) Dimethachlor (PM, S. 406-407), 2-Chlor-N-(2,6-dimethylphenyl)-N-(2-methoxyethyl)-aceto-2',6'-xylilid, (30-4000 g AS/ha, insbesondere 200-3000 g AS/ha);

(B2) Herbizide, die überwiegend blattwirksam sind und gegen Dikotyle eingesetzt werden können, beispielsweise die Verbindungen

(B2.1) Quinmerac (PM, S. 1080-1082). d. h. 7-Chlor-3-methylchinolin-8-carbonsäure und deren Salze, (50-1000 g AS/ha, insbesondere 80-800 g AS/ha),

(B2.2) Clopyralid (PM, S. 260-263), d. h. 3,6-Dichiorpyridin-2-carbonsäure und deren Salze, (20-1000 g AS/ha, insbesondere 30-800 g AS/ha),

(B2.3) Pyridate (PM, S. 1064-1066), d. h. O-(6-Chlor-3-phenylpyridazin-4-yl)-S-octyl-thiocarbonat, (100-5000 g AS/ha, insbesondere 200-3000 g AS/ha);

(B2.4) Ethametsulfuron-methyl (PM, S. 475-476), d. h. 2-{N-[N-(4-Ethoxy-6-methylamino-1,3,5-triazin-2-yl)-aminocarbonyl]-aminosulfonyl}-benzoesäuremethylester; (1-500 g AS/ha, insbesondere 2-300 g AS/ha),

(B3) Herbizide, die überwiegend blattwirksam sind und gegen monokotyle Schadpflanzen eingesetzt werden können, beispielsweise die Verbindungen:

(B3.1) Quizalofop-P und dessen Ester wie der Ethyl- oder Tefurylester (PM, S. 1089-1092), d. h. (R)-2-[4-(6-Chlorchinoxalin-2-yloxy)-phenoxy]-propionsäure bzw. ethylester bzw. -tetrahydrofurfurylester, (10-300 g AS/ha, insbesondere 20-250 g AS/ha), auch in der Form der Gemische mit dem S-Isomer, z. B. als racemisches Quizalofop bzw. dessen Ester,

(B3.2) Fenoxaprop-P und dessen Ester wie der Ethylester (PM, S. 519 bis 520), d. h. (R)-2-[4-(6-Chlorbenzoxazol-2-yloxy)-phenoxy]-propionsäure bzw. -ethylester, (10-300 g/ha, insbesondere 20-250 g/ha), auch in der Form der Gemische mit dem S-Isomer, z. B. als racemisches Fenoxaprop bzw. Fenoxaprop-ethyl,

(B3.3) Fluazifop-P und dessen Ester wie der Butylester (PM, S. 556-557), d. h. (R)-2-[4-(5-Trifluormethyl-pyridyl-2-yloxy)-phenoxy]-propionsäure bzw. -butylester; (20-1500 g AS/ha, insbesondere 30 bis 1200 g AS/ha), auch in der Form der Gemische mit dem S-Isomer, z. B. als racemisches Fluazifop bzw. dessen Ester,

(B3.4) Haloxyfop und Haloxyfop-P und deren Ester wie der Methyl- oder der Etotylester (PM, S. 660-663), d. h. (R,S)- bzw. (R)-2-[4-(3-Chlor-5-trifluormethyl-pyrid-2-yloxy)-phenoxy]-propionsäure bzw. -methylester bzw. -etotylester, (10-300 g AS/ha, insbesondere 20-250 g AS/ha) und

(B3.5) Propaquizafop (PM, S. 1021-1022), d. h. (R)-2-[4-(6-Chlorchinoxalin-2-yloxy)-phenoxy]-propionsäure-isopropylidenamino-oxyethylester, (10-300 g/ha, insbesondere 20-250 g/ha) und

(B4) Herbizide, die sowohl blattwirksam als auch bodenwirksam sind und gegen monokotyle Schadpflanzen eingesetzt werden können, beispielsweise

(B4.1) Sethoxydim (PM, S. 1101-1103), d. h. (E,Z)-2-(1-Ethoxyiminobutyl)-5-[2-(ethylthio)-propyl]-3-hydroxy-cyclohex-2-enon, (50-3000, insbesondere 100-2000 g AS/ha),

(B4.2) Cycloxydim (PM, S. 290-291), d. h. 2-(1-Ethoxyiminobutyl)-3-hydroxy-5-thian-3-ylcyclohex-2-enon, (10-1000 g AS/ha, insbesondere 30-800 g AS/ha),

(B4.3) Clethodim (PM, S. 250-251), d. h. 2-{(E)1-[(E)-3-Chlorallyloxyimino]-propyl}-5-[-2(ethylthio)-propyl]-3-hydroxy-cyclohex-2-enon (10-800, insbesondere 20-600 g AS/ha).

Die Aufwandmengen der Herbizide (B) können von Herbizid zu Herbizid stark variieren. Als grobe Richtgröße können folgende Bereiche gelten:

| | |
|---|---|
| Zu Verbindungen (B0) | 1-2000, vorzugsweise 5-2000 g AS/ha (vgl. die Angaben zur Gruppe der Verbindungen (A) |
| Zu Verbindungen (B1) | 10-5000 g AS/ha, insbesondere 20-4000 g AS/ha, |
| Zu Verbindungen (B2) | 1-5000 g AS/ha, insbesondere 2-3000 g AS/ha, ganz besonders 10-2000 g AS/ha, |
| Zu Verbindungen (B3) | 5-1500 g AS/ha, insbesondere 5-1200 g AS/ha, ganz besonders 20-500 g AS/ha, |
| Zu Verbindungen (B4) | 5-3000 g AS/ha, inbesondere 5-2000 g AS/ha, ganz besonders 20-1000 g AS/ha, |

Die Mengenverhältnisse der Verbindungen (A) und (B) ergeben sich aus den genannten Aufwandmengen für die Einzelstoffe. Folgende Mengenverhältnisse sind beispielsweise von besonderem Interesse:

(A):(B) im Bereich von 2000:1 bis 1:5000, vorzugsweise 750:1 bis 1:1500, insbesondere 400:1 bis 1:1000, ganz besonders 200:1 bis 1:400,
(A):(B0) von 1000:1 bis 1:400, vorzugsweise 400:1 bis 1:400, insbesondere 200:1 bis 1:200, ganz besonders 200:1 bis 1:75,
(A1):(B1) von 100:1 bis 1:250, vorzugsweise 50:1 bis 1:200, insbesondere 50:1 bis 1:50,
(A1):(B2) von 1000:1 bis 1:250, vorzugsweise 500:1 bis 1:150, insbesondere 100:1 bis 1:50, ganz besonders 50:1 bis 1:20,
(A1):(B3) von 400:1 bis 1:100, vorzugsweise 100:1 bis 1:100, insbesondere 50:1 bis 1:50, ganz besonders 20:1 bis 1:5,
(A1):(B4) 200:1 bis 1:200, vorzugsweise von 100:1 bis 1:150, insbesondere von 100:1 bis 1:100 ganz besonders von 50:1 bis 1:50,
(A2):(B1) von 200:1 bis 1:250, vorzugsweise 100:1 bis 1:200, insbesondere 60:1 bis 1:100,
(A2):(B2) von 2000:1 bis 1:250, vorzugsweise 1000:1 bis 1:150, insbesondere von 200:1 bis 1:50, ganz besonders von 60:1 bis 1:20,
(A2):(B3) von 500:1 bis 1:100, vorzugsweise 200:1 bis 1:80, insbesondere 100:1 bis 1:60, ganz besonders 50:1 bis 1:5,
(A2):(B4) von 300:1 bis 1:150, vorzugsweise 200:1 bis 1:150, insbesondere von 100:1 bis 1:100, ganz besonders 1:50 bis 1:50,
(A3):(B1) von 200:1 bis 1:5000, vorzugsweise von 100:1 bis 1:4000, insbesondere 50:1 bis 1:1000, ganz besonders 20:1 bis 1:500, weiter bevorzugt 10:1 bis 1:100,
(A3):(B2) von 2000:1 bis 1:5000, vorzugsweise 1000:1 bis 1:3000, insbesondere 500:1 bis 1:1000, ganz besonders 20:1 bis 1:1:500, weiter bevorzugt 10:1 bis 1:100, (A3):(B3) von 200:1 bis 1:1500, vorzugsweise von 100:1 bis 1:1200, insbesondere 50:1 bis 1:600, ganz besonders 20:1 bis 1:200, weiter bevorzugt 5:1 bis 1:20,
(A3):(B4) von 200:1 bis 1:3000, vorzugsweise 100:1 bis 1:2000, insbesondere 50:1 bis 1:1000, ganz besonders 20:1 bis 1:100, weiter bevorzugt 10:1 bis 1:50,
(A4):(B1) von 150:1 bis 1:2500, vorzugsweise 80:1 bis 1:2000, insbesondere 20:1 bis 1:1000, ganz besonders 10:1 bis 1:500,
(A4):(B2) von 1500:1 bis 1:2500, vorzugsweise von 750:1 bis 1:1500, insbesondere 20:1 bis 1:1000, ganz besonders 10:1 bis 1:500,
(A4):(B3) von 150:1 bis 1:100, vorzugsweise 100:1 bis 1:100, insbesondere 75:1 bis 1:60, ganz besonders 50:1 bis 1:50, weiter bevorzugt 20:1 bis 1:20,
(A4):(B4) von 150:1 bis 1:1500, vorzugsweise 100:1 bis 1:1000, insbesondere 20:1 bis 1:200, ganz besonders 10:1 bis 1:100.

Von besonderem Interesse ist die Anwendung der Kombinationen

(A1.1) + (B1.1), (A1.1) + (B1.2), (A1.1) + (B1.3), (A1.1) + (B1.4), (A1.1) + (B1.5), (A1.1) + (B1.6), (A1.1) + (B1.7),
(A1.2) + (B1.1), (A1.2) + (B1.2), (A1.2) + (B1.3), (A1.2) + (B1.4), (A1.2) + (B1.5), (A1.2) +(B1.6), (A1.1) + (B1.7),
(A1.1) + (B2.1), (A1.1) + (B2.2), (A1.1) + (B2.3), (A1.1) + (B2.4),
(A1.2) + (B2.1), (A1.2) + (B2.2), (A1.2) + (B2.3), (A1.2) + (B2.4),
(A1.1) + (B3.1), (A1.1) + (B3.2), (A1.1) + (B3.3), (A1.1) + (B3.4), (A1.1) + (B3.5),
(A1.2) + (B3.1), (A1.2) + (B3.2), (A1.2) + (B3.3), (A1.2) + (B3.4), (A1.2) + (B3.5),
(A1.1) + (B4.1), (A1.1) + (B4.2), (A1.1) + (B4.3),
(A1.2) + (B4.1), (A1.2) + (B4.2), (A1.2) + (B4.3),
(A2.2) + (B1.1), (A2.2) + (B1.2), (A2.2) + (B1.3), (A2.2) + (B1.4), (A2.2) + (B1.5), (A2.2) + (B1.6), (A.2.2) + (B1.7),

(A2.2) + (B2.1), (A2.2) + (B2.2), (A2.2) + (B2.3), (A2.2) + (B2.4),
(A2.2) + (B3.1), (A2.2) + (B3.2), (A2.2) + (B3.3), (A2.2) + (B3.4), (A2.2) + (B3.5),
(A2.2) + (B4.1), (A2.2) + (B4.2), (A2.2) + (B4.3).

Im Falle der Kombination einer Verbindung (A) mit einer oder mehreren Verbindungen (B0) handelt es sich definitionsgemäß um eine Kombination von zwei oder mehreren Verbindungen aus der Gruppe (A). Wegen der breitwirksamen Herbizide (A) setzt eine solche Kombination voraus, daß die transgenen oder Pflanzen oder Mutanten kreuzresistent gegenüber verschiedenen Herbiziden (A) sind. Derartige Kreuzresistenzen bei transgenen Pflanzen sind bereits bekannt; vgl. WO-A-98/20144.

In Einzelfällen kann es sinnvoll sein, eine oder mehrere der Verbindungen (A) mit mehreren Verbindungen (B), vorzugsweise aus den Klassen (B1), (B2), (B3) und (B4) zu kombinieren.

Weiterhin können die erfindungsgemäßen Kombinationen zusammen mit anderen Wirkstoffen beispielsweise aus der Gruppe der Safener, Fungizide, Insektizide und Pflanzenwachstumsregulatoren oder aus der Gruppe der im Pflanzenschutz üblichen Zusatzstoffe und Formulierungshilfsmittel eingesetzt werden.
Zusatzstoffe sind beispielsweise Düngemittel und Farbstoffe.

Bevorzugt sind Herbizid-Kombinationen aus einer oder mehreren Verbindungen (A) mit einer oder mehreren Verbindungen der Gruppe (B1) oder (B2) oder (B3) oder (B4). Weiter bevorzugt sind Kombinationen von einer oder mehreren Verbindungen (A), z.B. (A1.2) + (A2.2), vorzugsweise einer Verbindung (A), mit einer oder mehreren Verbindungen (B) nach dem Schema:

(A) + (B1) + (B2), (A) + (B1) + (B3), (A) + (B1) + (B4), (A) + (B2) + (B3),
(A) + (B2) + (B4), (A) + (B3) + (B4), (A) + (B1) + (B2) + (B3),
(A) + (B1) + (B2) + (B4), (A) + (B1) + (B3) + (B4), (A) + (B2) + (B3) +(B4).

Dabei sind auch solche Kombinationen erfindungsgemäß, denen noch ein oder mehrere weitere Wirkstoffe anderer Struktur [Wirkstoffe (C)], z.B. Safener oder weitere Herbizide, zugesetzt werden wie (A) + (B1) + (C), (A) + (B2) + (C), (A) + (B3) + (C) oder (A) + (B4) + (C), (A) + (B1) + (B2) + (C), (A) + (B1) + (B3) + (C), (A) + (B1) + (B4) + (C), (A) + (B2) + (B4) + (C), oder (A) + (B3) + (B4) + (C).

Für Kombinationen der letztgenannten Art mit drei oder mehr Wirkstoffen gelten die nachstehend insbesondere für erfindungsgemäße Zweierkombinationen erläuterten bevorzugten Bedingungen in erster Linie ebenfalls, sofern darin die erfindungsgemäßen Zweierkombinationen enthalten sind und bezüglich der betreffenden Zweierkombination.

Von besonderem Interesse ist auch die erfindungsgemäße Verwendung der Kombinationen mit einem oder mehreren Herbiziden aus der Gruppe (A), vorzugsweise (A1.2) oder (A2.2), insbesondere (A1.2) und
mit einem oder mehreren Herbiziden, vorzugsweise einem Herbizid, aus der Gruppe

(B1') Metazachlor, Clomazone, Napropamide, Carbetamide und Dimefuron und/oder gegebenenfalls Dimethachlor und/oder
(B2') Quinmerac, Clopyralid und Ethametsulfuron-methyl und/oder
(B3') Quizalofop-P/Quizalofop und dessen Ester, Fenoxaprop-P/Fenoxaprop und dessen Ester, Fluazifop-P/Fluazifop und dessen Ester, Haloxyfop, Haloxyfop-P und deren Ester, vorzugsweise Fenoxaprop-P, Fluazifop-P, Haloxyfop, Haloxyfop-P und deren Ester, und/oder
(B4') Sethoxydim, Cycloxydim und Clethodim.

Bevorzugt sind dabei die Kombinationen aus der jeweiligen Komponente (A) mit einem oder mehreren Herbiziden aus der Gruppe (B1'), (B2'), (B3') oder (B4').
Weiter bevorzugt sind die Kombinationen (A)+(B1')+(B2'), (A)+(B1')+(B3'), (A)+(B1')+(B4'), (A)+(B2')+(B3'), (A)+(B2')+(B4') oder (A)+(B3')+(B4').

Einige der genannten Kombinationen sind neu und als solche auch Gegenstand der Erfindung (siehe Anspruch 9).

Die erfindungsgemäßen Kombinationen (= herbiziden Mittel) weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden durch die Wirkstoffe gut erfaßt. Dabei ist es gleichgültig, ob die Substanzen im Vorsaat-, Vorauflauf- oder Nachauflaufverfahren ausgebracht werden. Bevorzugt ist die Anwendung im Nachauflaufverfahren oder im frühen Nachsaat-Vorauflaufverfahren.

Im einzelnen seien beispielhaft einige Vertreter der mono- und dikotylen Unkrautflora genannt, die durch die erfindungsgemäßen Verbindungen kontrolliert werden können, ohne daß durch die Nennung eine Beschränkung auf

bestimmte Arten erfolgen soll. Auf der Seite der monokotylen Unkrautarten werden z.B. Avena spp., Setaria spp., Agropyron spp. und Wildgetreideformen gut erfaßt, aber auch Alopecurus spp., Digitaria spp., Lolium spp., Echinochloa spp., Phalaris spp., Poa spp., sowie Cyperusarten aus der annuellen Gruppe und auf seiten der perennierenden Spezies Cynodon, imperata sowie Sorghum und auch ausdauernde Cyperusarten.

Bei dikotylen Unkrautarten erstreckt sich das Wirkungsspektrum auf Arten wie z.B. Chenopodium spp., Matricaria spp., Kochia spp., Veronica spp., Viola spp., Anthemis spp., Stellaria spp., Thlaspi spp., Galium spp., Datura spp., Cupsella spp. und Cirsium spp.,
aber auch Abutilon spp., Amaranthus spp., Chrysanthemum spp., Ipomoea spp., Lamium spp., Pharbitis spp., Sida spp. und Sinapis spp., Convolvulus, Rumex und Artemisia.

Werden die erfindungsgemäßen Verbindungen vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der Wirkstoffe auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so daß auf diese Weise eine für die Kulturpflanzen schädliche Unkrautkonkurrenz sehr früh und nachhaltig beseitigt wird.

Die erfindungsgemäßen herbiziden Mittel zeichnen sich im Vergleich zu den Einzelpräparaten durch eine schneller einsetzende und länger andauernde herbizide Wirkung aus. Die Regenfestigkeit der Wirkstoffe in den erfindungsgemäßen Kombinationen ist in der Regel günstig. Als besonderer Vorteil fällt ins Gewicht, daß die in den Kombinationen verwendeten und wirksamen Dosierungen von Verbindungen (A) und (B) so gering eingestellt werden können, daß ihre Bodenwirkung optimal ist. Somit wird deren Einsatz nicht nur in empfindlichen Kulturen erst möglich, sondern Grundwasser-Kontaminationen werden praktisch vermieden. Durch die erfindungsgemäßen Kombination von Wirkstoffen wird eine erhebliche Reduzierung der nötigen Aufwandmenge der Wirkstoffe ermöglicht.

Bei der gemeinsamer Anwendung von Herbiziden des Typs (A)+(B) treten überadditive (= synergistische) Effekte auf. Dabei ist die Wirkung in den Kombinationen stärker als die zu erwartende Summe der Wirkungen der eingesetzten Einzelherbizide. Die synergistischen Effekte erlauben eine Reduzierung der Aufwandmenge, die Bekämpfung eines breiteren Spektrums von Unkräutem und Ungräsern, einen schnelleren Eintritt der herbiziden Wirkung, eine längere Dauerwirkung, eine bessere Kontrolle der Schadpflanzen mit nur einer bzw. wenigen Applikationen sowie eine Ausweitung des möglichen Anwendungszeitraumes. Teilweise wird durch den Einsatz der Mittel auch die Menge an schädlichen Inhaltsstoffen in der Kulturpflanze, wie Stickstoff oder Ölsäure, reduziert.
Die genannten Eigenschaften und Vorteile sind in der praktischen Unkrautbekämpfung gefordert, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Kombinationen hinsichtlich der beschriebenen Eigenschaften deutlich übertroffen.

Obgleich die erfindungsgemäßen Verbindungen eine ausgezeichnete herbizide Aktivität gegenüber mono- und dikotylen Unkräutern aufweisen, werden die toleranten bzw. kreuztoleranten Rapspflanzen nur unwesentlich oder gar nicht geschädigt.

Darüberhinaus weisen die erfindungsgemäßen Mittel teilweise hervorragende wachstumsregulatorische Eigenschaften bei den Rapspflanzen auf. Sie greifen regulierend in den pflanzeneigenen Stoffwechsel ein und können damit zur gezielten Beeinflussung von Pflanzeninhaltsstoffen eingesetzt werden. Desweiteren eignen sie sich auch zur generellen Steuerung und Hemmung von unerwünschtem vegetativen Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die Mittel zur Bekämpfung von Schadpflanzen in bekannten toleranten oder kreuztoleranten Rapskulturen oder noch zu entwickelnden toleranten oder gentechnisch veränderten Rapskulturen eingesetzt werden. Die transgenen Pflanzen zeichnen sich in der Regel durch besondere vorteilhafte Eigenschaften aus, neben den Resistenzen gegenüber den erfindungsgemäßen Mitteln beispielsweise durch Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Ölgehalt oder veränderter Qualität, z. B. anderer Fettsäurezusammensetzung des Ernteguts bekannt.

Herkömmliche Wege zur Herstellung neuer Pflanzen, die im Vergleich zu bisher vorkommenden Pflanzen modifizierte Eigenschaften aufweisen, bestehen beispielsweise in klassischen Züchtungsverfahren und der Erzeugung von Mutanten. Alternativ können neue Pflanzen mit veränderten Eigenschaften mit Hilfe gentechnischer Verfahren erzeugt werden (siehe z. B. EP-A-0221044, EP-A-0131624). Beschrieben wurden beispielsweise in mehreren Fällen

- gentechnische Veränderungen von Kulturpflanzen zwecks Modifikation der in den Pflanzen synthetisierten Stärke (z. B. WO 92/11376, WO 92/14827, WO 91/19806),
- transgene Kulturpflanzen, welche Resistenzen gegen andere Herbizide aufweisen, beispielsweise gegen Sulfonylharnstoffe (EP-A-0257993, US-A-5013659),
- transgene Kulturpflanzen, mit der Fähigkeit Bacillus thuringiensis-Toxine (Bt-Toxine) zu produzieren, welche die Pflanzen gegen bestimmte Schädlinge resistent machen (EP-A-0142924, EP-A-0193259).
- transgene Kulturpflanzen mit modifizierter Fettsäurezusammensetzung (WO 91/13972).

Zahlreiche molekularbiologische Techniken, mit denen neue transgene Pflanzen mit veränderten Eigenschaften hergestellt werden können, sind im Prinzip bekannt; siehe z.B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996 oder Christou, "Trends in Plant Science" 1 (1996) 423-431).

Für derartige gentechnische Manipulationen können Nudeinsäuremoleküle in Plasmide eingebracht werden, die eine Mutagenese oder eine Sequenzveränderung durch Rekombination von DNA-Sequenzen erlauben. Mit Hilfe der obengenannten Standardverfahren können z. B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden.

Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codiereden Sequenzen eines Genprodukts aufweisen, aber nicht vollkommen identisch sind.

Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z. B. die codierende Region mit DNA-Sequenzen verknüpft werden, die die Lokalisierung in einem bestimmten Kompartiment gewährleisten. Derartige Sequenzen sind dem Fachmann bekannt (siehe beispielsweise Braun et al., EMBO J. 11 (1992), 3219-3227; Wolter et al., Proc. Natl. Acad. Sci. USA 85 (1988), 846-850; Sonnewald et al., Plant J. 1 (1991), 95-106).

Die transgenen Pflanzenzellen können nach bekannten Techniken zu ganzen Pflanzen regeneriert werden. Bei den transgenen Pflanzen kann es sich prinzipiell um Pflanzen jeder beliebigen Pflanzenspezies handeln, d.h. sowohl monokotyle als auch dikotyle Pflanzen.

So sind transgene Pflanzen erhältlich, die veränderte Eigenschaften durch Überexpression, Suppression oder Inhibierung homologer (= natürlicher) Gene oder Gensequenzen oder Expression heterologer (= fremder) Gene oder Gensequenzen aufweisen.

Gegenstand der Erfindung ist deshalb auch ein Verfahren zur Bekämpfung von unerwünschtem Pflanzenwuchs in toleranten Rapskulturen, dadurch gekennzeichnet, daß man ein oder mehrere Herbizide des Typs (A) mit einem oder mehreren Herbiziden des Typs (B) auf die Schadpflanzen, Pflanzenteile davon oder die Anbaufläche appliziert.

Gegenstand der Erfindung sind auch die neuen Kombinationen aus Verbindungen (A)+(B) und diese enthaltende herbizide Mittel.

Die erfindungsgemäßen Wirkstoffkombinationen können sowohl als Mischformulierungen der zwei Komponenten, gegebenenfalls mit weiteren Wirkstoffen, Zusatzstoffen und/oder üblichen Formulierungshilfsmitteln vorliegen, die dann in üblicher Weise mit Wasser verdünnt zur Anwendung gebracht werden, oder als sogenannte Tankmischungen durch gemeinsame Verdünnung der getrennt formulierten oder partiell getrennt formulierten Komponenten mit Wasser hergestellt werden.

Die Verbindungen (A) und (B) oder deren Kombinationen können auf verschiedene Art formuliert werden, je nachdem welche biologischen und/oder chemisch-physikalischen Parameter vorgegeben sind. Als allgemeine Formulierungsmöglichkeiten kommen beispielsweise in Frage: Spritzpulver (WP), emulgierbare Konzentrate (EC), wäßrige Lösungen (SL), Emulsionen (EW) wie Öl-in-Wasser- und Wasser-in-Öl-Emulsionen, versprühbare Lösungen oder Emulsionen, Dispersionen auf Öl- oder Wasserbasis, Suspoemulsionen, Stäubemittel (DP), Beizmittel, Granulate zur Boden- oder Streuapplikation oder wasserdispergierbare Granulate (WG), ULV-Formulierungen, Mikrokapseln oder Wachse.

Die einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986; van Valkenburg, "Pesticides Formulations", Marcel Dekker N.Y., 1973; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y. Marsden, "Solvents Guide", 2nd Ed., Interscience, N.Y. 1950; McCutcheon's, "Detergents and Emulsifiers Annual", MC Publ. Corp., Ridegewood N.J.; Sisley and Wood, "Encydopedia of Surface Active Egents", Chem. Publ. Co. Inc., N.Y. 1964; Schönfeldt, "Grenzflächenaktive Äthylenoxidaddukte", Wiss. Verlagsgesellschaft, Stuttgart 1976, Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, wie anderen Herbiziden, Fungiziden oder Insektiziden, sowie Safenern, Düngemitteln und/oder Wachstumsregulatoren herstellen, z.B. in Form einer Fertigformulierung oder als Tankmix.

Spritzpulver (benetzbare Pulver) sind in Wasser gleichmäßig dispergierbare Präparate, die neben dem Wirkstoff außer einem Verdünnungs- oder Inertstoff noch Tenside ionischer oder nichtionischer Art (Netzmittel, Dispergiermittel), z.B. polyoxethylierte Alkylphenole, polyethoxylierte Fettalkohole oder -Fettamine, Alkansulfonate oder Alkylbenzolsulfonate, ligninsulfonsaures Natrium, 2,2'dinaphthylmethan-6,6'-disulfonsaures Natrium, dibutylnaphthalinsulfonsaures Natrium oder auch oleoylmethyltaurinsaures Natrium enthalten.

Emulgierbare Konzentrate werden durch Auflösen des Wirkstoffs in einem organischen Lösungsmittel, z.B. Butanol, Cyclohexanon, Dimethylformamid, Xylol oder auch höhersiedenden Aromaten oder Kohlenwasserstoffe unter Zusatz von einem oder mehreren ionischen oder nichtionischen Tensiden (Emulgatoren) hergestellt. Als Emulgatoren können beispielsweise verwendet werden: Alkylarylsulfonsaure CalciumSalze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitanfettsäureester oder Polyoxethylensorbitester.

Stäubemittel erhält man durch Vermahlen des Wirkstoffs mit fein verteilten festen Stoffen, z.B. Talkum, natürlichen Tonen, wie Kaolin, Bentonit und Pyrophyllit, oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden. Wasserdispergierbare Granulate werden in der Regel nach Verfahren wie Sprühtrocknung, Wirbelbett-Granulierung, Teller-Granulierung, Mischung mit Hochgeschwindigkeitsmischern und Extrusion ohne festes Inertmaterial hergestellt.

Die agrochemischen Zubereitungen enthalten in der Regel 0,1 bis 99 Gewichtsprozent, insbesondere 2 bis 95 Gew.-%, Wirkstoffe der Typen A und/oder B, wobei je nach Formulierungsart folgende Konzentrationen üblich sind:

> In Spritzpulvern beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentraten kann die Wirkstoffkonzentration z.B. 5 bis 80 Gew.-%, betragen.
>
> Staubförmige Formulierungen enthalten meistens 5 bis 20 Gew.-% an Wirkstoff, versprühbare Lösungen etwa 0,2 bis 25 Gew.-% Wirkstoff.
>
> Bei Granulaten wie dispergierbaren Granulaten hängt der Wirkstoffgehalt zum Teil davon ab, ob die wirksame Verbindung flüssig oder fest vorliegt und welche Granulierhilsmittel und Füllstoffe verwendet werden. In der Regel liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Konservierungs-, Frostschutz- und Lösungsmittel, Füll-, Farb- und Trägerstoffe, Entschäumer, Verdunstungshemmer und Mittel, die den pH-Wert oder die Viskosität beeinflussen.

Beispielsweise ist bekannt, daß die Wirkung von Glufosinate-ammonium (A1.2) ebenso wie die seines L-Enantiomeren durch oberflächenaktive Substanzen verbessert werden kann, vorzugsweise durch Netzmittel aus der Reihe der Alkyl-polyglykolethersulfate, die beispielsweise 10 bis 18 C-Atomen enthalten und in Form ihrer Alkali- oder Ammoniumsalze, aber auch als Magnesiumsalz verwendet werden, wie $C_{12}/C_{14}$-Fettalkohol-diglykolethersulfat-Natrium (®Genapol LRO, Hoechst); siehe EP-A-0476555, EP-A-0048436, EP-A-0336151 oder US-A-4,400,196 sowie Proc. EWRS Symp. "Factors Affecting Herbicidal Activity and Selectivity", 227 - 232 (1988). Weiterhin ist bekannt, daß Alkylpolyglykolethersulfate auch als Penetrationshilfsmittel und Wirkungsverstärker für eine Reihe anderer Herbizide, unter anderem auch für Herbizide aus der Reihe der Imidazolinone geeignet ist; siehe EP-A-0502014.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Die Wirkstoffe können auf die Pflanzen, Pflanzenteile, Pflanzensamen oder die Anbaufläche (Ackerboden) ausgebracht werden, vorzugsweise auf die grünen Pflanzen und Pflanzenteile und gegebenenfalls zusätzlich auf den Ackerboden.

Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Eine gemeinsame herbizide Formulierung der erfindungsgemäßen Kombination an Wirkstoffen (A) und (B) hat den Vorteil der leichteren Anwendbarkeit, weil die Mengen der Komponenten bereits im richtigen Verhältnis zueinander eingestellt sind. Außerdem können die Hilfsmittel in der Formulierung aufeinander optimal abgestimmt werden, während ein Tank-mix von unterschiedlichen Formulierungen unerwünschte Kombinationen von Hilfstoffen ergeben kann.

A. Formulierungsbeispiele allgemeiner Art

a) Ein Stäubemittel wird erhalten, indem man 10 Gew.-Teile eines Wirkstoffs/Wirksstoffgemischs und 90 Gew. -Teile Talkum als Inertstoff mischt und in einer Schlagmühle zerkleinert.

b) Ein in Wasser leicht dispergierbares, benetzbares Pulver wird erhalten, indem man 25 Gew.-Teile eines Wirkstoffs/Wirksstoffgemischs, 64 Gew.-Teile kaolinhaltigen Quarz als Inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gew.-Teile eines Wirkstoffs/Wirksstoffgemischs mit 6 Gew.-Teilen Alkylphenolpolyglykolether (®Triton X 207), 3 Gew.-Teilen Isotridecanolpolyglykolether (8 EO) und 71 Gew.-Teilen paraffinischem Mineralöl (Siedebereich z.B. ca. 255 bis 277°C) mischt und in einer Reibkugelmühle auf eine Feinheit von unter 5 Mikron vermahlt.

d) Ein emulgierbares Konzentrat wird erhalten aus 15 Gew.-Teilen eines Wirkstoffs/Wirksstoffgemischs, 75 Gew. -Teilen Cyclohexanon als Lösemittel und 10 Gew.-Teilen oxethyliertem Nonylphenol als Emulgator.

e) Ein in Wasser dispergierbares Granulat wird erhalten indem man

75 Gew.-Teile eines Wirkstoffs/Wirksstoffgemischs,
10 Gew.-Teile ligninsulfonsaures Calcium,
5 Gew.-Teile Natriumlaurylsulfat,
3 Gew.-Teile Polyvinylalkohol und
7 Gew.-Teile Kaolin

mischt, auf einer Stiftmühle mahlt und das Pulver in einem Wirbelbett durch Aufsprühen von Wasser als Granulierflüssigkeit granuliert.

f) Ein in Wasser dispergierbares Granulat wird auch erhalten, indem man

25 Gew.-Teile eines Wirkstoffs/Wirksstoffgemischs,
5 Gew.-Teile 2,2'-dinaphthylmethan-6,6'-disulfonsaures Natrium,
2 Gew.-Teile oleoylmethyltaurinsaures Natrium,
1 Gew.-Teil Polyvinylalkohol,
17 Gew.-Teile Calciumcarbonat und
50 Gew.-Teile Wasser

auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

B. Biologische Beispiele

1. Unkrautwirkung im Vorauflauf

Samen bzw. Rhizomstücke von mono- und dikotylen Unkrautpflanzen werden in Papptöpfen in sandiger Lehmerde ausgelegt und mit Erde abgedeckt. Die in Form von konzentrierten wäßrigen Lösungen, benetzbaren Pulvern oder Emulsionskonzentraten formulierten Mittel werden dann als wäßrige Lösung, Suspension bzw. Emulsion mit einer Wasseraufwandmenge von umgerechnet 600 bis 800 l/ha in unterschiedlichen Dosierungen auf die Oberfläche der Abdeckerde appliziert. Nach der Behandlung werden die Töpfe im Gewächshaus aufgestellt und unter guten Wachstumsbedingungen für die Unkräuter gehalten. Die optische Bonitur der Pflanzen- bzw. Auflaufschäden erfolgt nach dem Auflaufen der Versuchspflanzen nach einer Versuchszeit von 3 bis 4 Wochen im Vergleich zu unbehandelten Kontrollen. Wie die Testergebnisse zeigen, weisen die erfindungsgemäßen Mittel eine gute herbizide Vorauflaufwirksamkeit gegen ein breites Spektrum von Ungräsern und Unkräutern auf.

Dabei werden häufig Wirkungen der erfindungsgemäßen Kombinationen beobachtet, die die formale Summe der Wirkungen bei Einzelapplikation der Herbizide übertreffen (= synergistische Wirkung).
Wenn die beobachteten Wirkungswerte bereits die formale Summe (= $E^A$) der Werte zu den Versuchen mit Einzelapplikationen übertreffen, dann übertreffen sie den Erwartungswert nach Colby (= $E^c$) ebenfalls, der sich nach folgender Formel errechnet und ebenfalls als Hinweis auf Synergismus angesehen wird (vgl. S. R. Colby; in Weeds 15 (1967) S. 20 bis 22):

$$E^c = A+B-(A \cdot B/100)$$

Dabei bedeuten: A, B = Wirkung der Wirkstoffe A bzw. in % bei a bzw. b g AS/ha; $E^C$ = Erwartungswert in % bei a+b g AS/ha.
Die beobachteten Werte der Versuche zeigen bei geeigneten niedrigen Dosierungen eine Wirkung der Kombinationen, die über den Erwartungswerten nach Colby liegen.

2. Unkrautwirkung im Nachauflauf

Samen bzw. Rhizomstücke von mono- und dikotylen Unkräutern werden in Papptöpfen in sandigem Lehmboden ausgelegt, mit Erde abgedeckt und im Gewächshaus unter guten Wachstumsbedingungen angezogen. Drei Wochen nach der Aussaat werden die Versuchspflanzen im Dreiblattstadium mit den erfindungsgemäßen Mitteln behandelt. Die als Spritzpulver bzw. als Emulsionskonzentrate formulierten erfindungsgemäßen Mittel werden in verschiedenen Dosierungen mit einer Wasseraufwandmenge von umgerechnet 600 bis 800 l/ha auf die grünen Pflanzenteile gesprüht. Nach ca. 3 bis 4 Wochen Standzeit der Versuchspflanzen im Gewächshaus unter optimalen Wachstumsbedingungen wird die Wirkung der Präparate optisch im Vergleich zu unbehandelten Kontrollen bonitiert. Die erfindungsgemäßen Mittel weisen auch im Nachauflauf eine gute herbizide Wirksamkeit gegen ein breites Spektrum wirtschaftlich wichtiger Ungräser und Unkräuter auf.
Dabei werden häufig Wirkungen der erfindungsgemäßen Kombinationen beobachtet, die die formale Summe der Wirkungen bei Einzelapplikation der Herbizide übertreffen. Die beobachteten Werte der Versuche zeigen bei geeigneten niedrigen Dosierungen eine Wirkung der Kombinationen, die über den Erwartungswerten nach Colby (vgl. Bonitur in Beispiel 1) liegen.

3. Herbizide Wirkung und Kulturpflanzenverträglichkeit (Feldversuch)

Pflanzen von transgenem Raps mit einer Resistenz gegen ein oder mehrere Herbizide (A) wurden unter zusammen mit typischen Unkrautpflanzen im Freiland auf Parzellen der Größe 2 x 5m unter natürlichen Freilandbedingungen herangezogen; alternativ stellte sich beim Heranziehen der Rapspflanzen die Verunkrautung natürlich ein. Die Behandlung mit den erfindungsgemäßen Mitteln und zur Kontrolle separat mit alleiniger Applikation der Komponentenwirkstoffe erfolgte unter Standardbedingungen mit einem Parzellen-Spritzgerät bei einer Wasseraufwandmenge von 200-300 Liter Wasser je Hektar in Parallelversuchen gemäß dem Schema aus Tabelle 1, d. h. im Vorsaat-Vorauflauf, im Nachsaat-Vorauflauf oder im Nachauflauf im frühen, mittleren oder späten Stadium.

Tabelle 1:

| Anwendungsschema - Beispiele | | | | | |
|---|---|---|---|---|---|
| Applikation der Wirkstoffe | Vorsaat | Vorauflauf nach Saat | Nachauflauf 1-2-Blatt | Nachauflauf 2-4-Blatt | Nachauflauf 6-Blatt |
| kombiniert | (A)+(B) | | | | |
| " | | (A)+(B) | | | |
| " | | | (A)+(B) | | |
| " | | | | (A)+(B) | |
| " | | | | | (A)+(B) |
| sequentiell | (A) | | (B) | | |
| " | | (A) | (B) | | |
| " | | (A) | | (B) | |
| " | | (A) | (A) | (B) | |
| " | | (A) | | (B) | (B) |
| " | | (A) | | (A)+(B) | |
| " | (B) | | (A) | | |
| " | | (B) | | (A)+(B) | |
| " | (A)+(B) | | (A)+(B) | | |
| " | (A)+(B) | (A)+(B) | (A)+(B) | | |
| " | | (A)+(B) | (A)+(B) | | |
| " | | (A)+(B) | (A)+(B) | (A)+(B) | |
| " | | (A)+(B) | (A)+(B) | (A)+(B) | (A)+(B) |
| " | | | (A)+(B) | (A)+(B) | |
| " | | | (A)+(B) | (A)+(B) | (A)+(B) |
| " | | | | (A)+(B) | (A)+(B) |

Im Abstand von 2, 4, 6 und 8 Wochen nach Applikation wurde die herbizide Wirksamkeit der Wirkstoffe bzw. Wirkstoffmischungen anhand der behandelten Parzellen im Vergleich zu unbehandelten Kontroll-Parzellen visuell bonitiert. Dabei wurde Schädigung und Entwicklung aller oberirdischen Pflanzenteile erfaßt. Die Bonitierung erfolgte nach einer Prozentskala (100% Wirkung = alle Plfanzen abgestorben; 50 % Wirkung = 50% der Pflanzen und grünen Pflanzenteile abgestorben; 0 % Wirkung = keine erkennbare Wirkung = wie Kontrollparzelle. Die Boniturwerte von jeweils 4 Parzellen wurden gemittelt.

Der Vergleich zeigte, daß die erfindungsgemäßen Kombinationen meist mehr, teilweise erheblich mehr herbizide Wirkung aufweisen als die Summe der Wirkungen der Einzelherbizide. Die Wirkungen lagen in wesentlichen Abschnitten des Boniturzeitraums über den Erwartungswerten nach Colby (vgl. Bonitur in Beispiel 1) und weisen deshalb auf einen Synergismus hin. Die Rapspflanzen dagegen wurden infolge der Behandlungen mit den herbiziden Mitteln nicht oder nur unwesentlich geschädigt.

In den Tabellen allgemein verwendete Abkürzungen:

g AS/ha = Gramm Aktivsubstanz (100 % Wirkstoff) pro Hektar
$E^A$ = Summe der herbiziden Wirkungen der Einzelapplikationen
$E^C$ = Erwartungswert nach Colby (vgl. Bonitur zu Tabelle 1)
"Raps LL" = ®Liberty-Link-Raps, der gegen Glufosinate-ammonium tolerant oder resistent ist,

Tabelle 2:

| Herbizide Wirkung im Raps-Feldversuch | | |
|---|---|---|
| Wirkstoff(e) | Dosis[1)] g AS/ha | Herbizide Wirkung[2)] (%) gegen Datura stramonium |
| (A1.2) | 600 | 90 |
| (B1.1) | 600 | 40 |
| | 1200 | 93 |
| (A1.2) + (B1.1) | 600 + 600 | 100 ($E^c$ = 94) |

Abkürzungen zu Tabelle 2:
1) = Applikation im 5-Blattstadium
(A1.2) = Glufosinate-ammonium
2) = Bonitur 3 Wochen nach Applikation
(B1.1) = Metazachlor

Tabelle 3:

| Herbizide Wirkung im Raps-Feldversuch | | | |
|---|---|---|---|
| Wirkstoff(e) | Dosis[1)] g AS/ha | Herbizide Wirkung[2)] (%) gegen Galium aparine | Raps LL |
| (A1.2) | 500 | 63 | 3 |
| | 250 | 41 | 0 |
| | 125 | 15 | 0 |
| (B1.5) + (B1.6) | 1500 + 750 | 73 | 5 |
| | 750 + 375 | 45 | 4 |
| (A1.2) + (B1.5) + (B1.6) | 125 + (750 + 375) | 78 ($E^A$ = 15 + 45) | 3 |
| | 250 (750 + 375) | 88 ($E^A$ = 41 + 45) | 3 |

Abkürzungen zu Tabelle 3:
1) = Applikation im 4-5-Biattstadium
(A1.2) = Glufosinate-ammonium
(B1.6) = Dimefuron
2) = Bonitur 36 Tage nach Applikation
(B1.5) = Carbetamide

Tabelle 4:

| Herbizide Wirkung im Feldversuch | | |
|---|---|---|
| Wirkstoff(e) | Dosis[1)] g AS/ha | Herbizide Wirkung[2)] (%) gegen Matricaria chamomita |
| | | |
| Nachauflaufapplikation: (A1.2) | 500<br>250<br>125 | 65<br>35<br>10 |

Abkürzungen zu Tabelle 4:
1) = Nachauflaufapplikation im 4-Blattstadium oder Vorauflaufapplikation, wie angegeben
2) = Bonitur jeweils 35 Tage nach Vorsaatapplikation und 28 Tage nach Nachauflaufapplikation
(A1.2) = Glufosinate-ammonium (B1.4) = Naproamide
(B1.2) = Trifluralin (B1.1) = Metazachlor
(B2.1) = Quinmerac (B2.3) = Pyridate

Tabelle 4: (fortgesetzt)

| Herbizide Wirkung im Feldversuch | | |
|---|---|---|
| Wirkstoff(e) | Dosis[1)] g AS/ha | Herbizide Wirkung[2)] (%) gegen Matricaria chamomita |
| Vorsaatapplikation: (B1.2) + (B1.4) | 950 + 1200 | 45 |
| Sequenz: Vorsaatapplikation von [(B1.4) + (B1.2)] gefolgt von Nachauflaufapplikation von (A1.2) | (950 + 1200) + 250 | 80 ($E^c$ = 64,3) |
| Nachauflaufapplikation: (B1.1) + (B2.1) | 600 + 200 | 83 |
| Nachauflaufapplikation: (A1.2) + (B1.1) + (B2.1) | 125 + 600 + 200 | 95 ($E^A$ = 93) |
| Nachauflauf (B2.1) | 300 | 50 |
| (A1.2) + (B2.1) | 125 + 300 | 65 ($E^A$ = 60) |
| Nachauflauf (B2.3) | 600 | 60 |
| (A1.2) + (B2.3) | 125 + 600 | 75 ($E^A$ = 70) |

Abkürzungen zu Tabelle 4:
1) = Nachauflaufapplikation im 4-Blattstadium oder Vorauflaufapplikation, wie angegeben
2) = Bonitur jeweils 35 Tage nach Vorsaatapplikation und 28 Tage nach Nachauflaufapplikation
(A1.2) = Glufosinate-ammonium (B1.4) = Naproamide
(B1.2) = Trifluralin (B1.1) = Metazachlor
(B2.1) = Quinmerac (B2.3) = Pyridate

Tabelle 5:

| Herbizide Wirkung im Feldversuch | | | | |
|---|---|---|---|---|
| Wirkstoff(e) | Dosis[1)] g AS/ha | Herbizide Wirkung[2)] (%) gegen | | Raps LL |
| | | Cirsium arvense | Chenopodium album | |
| (A1.2) | 350<br>230 | 97<br>85 | -<br>90 | 0<br>0 |
| (B2.4) | 15 | 0 | 30 | 0 |
| (A1.2) + (B2.4) | 230 + 15 | 98 ($E^A$ = 85) | 100 ($E^C$ = 93) | 0 |
| (B2.2) | 90 | 85 | 50 | 0 |
| (A1.2) + (B2.2) | 230 + 90 | 100 ($E^C$ = 98) | 85 ($E^A$ = 80) | 0 |

Abkürzungen zu Tabelle 5:
1) = Applikation im 4-Blattstadium
(A1.2) = Glufosinate-ammonium
(B2.4) = Ethametsulfuron-methyl
2) = Bonitur 15 Tage nach Applikation
(B2.2) = Clopyralid

## Patentansprüche

1. Verwendung von Herbizid-Kombinationen zur Bekämpfung von Schadpflanzen in Rapskulturen, **dadurch gekennzeichnet, dass** die jeweilige Herbizid-Kombination einen wirksamen Gehalt an

(A) einem breitwirksamen Herbizid aus der Gruppe der Verbindungen, welche aus

(A1) Verbindungen der Formeln (A1),

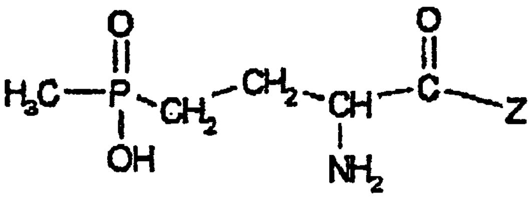

(A1)

worin Z einen Rest der Formel -OH oder einen Peptidrest der Formel $-NHCH(CH_3)CONHCH(CH_3)COOH$ oder $-NHCH(CH_3)CONHCH[CH_2CH(CH_3)_2]COOH$ bedeutet, und deren Estern und Salzen und anderen Phosphinothricin-derivaten,

(A2) Verbindungen der Formel (A2) und deren Estern und Salzen,

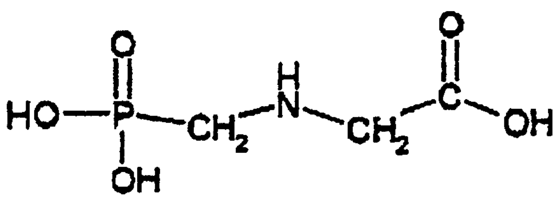

(A2)

vorzugsweise Glyphosate und dessen Alkalimetallsalzen oder Salzen mit Aminen,

(A3) Imidazolinonen und deren Salzen und

(A4) herbiziden Azolen aus der Gruppe der Hemmstoffe der Protoporphyrinogen-oxidase (PPO-Hemmstoffe) und des PPO-Hemmstoffs WC9717

besteht,

und

(B) einem oder mehreren Herbiziden aus der Gruppe der Verbindungen, welche aus

(B0) Herbizide (A) aus der Gruppe der Herbizide (A1) bis (A4), die nicht mit dem der Komponente (A) identisch sind,

(B1) Metazachlor, Trifluralin, Clomazone, Napropamide, Carbetamide, Dimefuron und Dimethachlor,

(B2) Quinmerac, Clopyralid, Pyridate und Ethametsulfuron-methyl,

(B3) Quizalofop-P und dessen Ester, Fenoxaprop-P und dessen Ester, Fluazifop-P und dessen Ester, Haloxyfop und Haloxyfop-P und deren Ester und Propaquizafop und

(B4) Sethoxydim, Cycloxydim und Clethodim besteht,

aufweist und die Rapskulturen gegenüber den in der Kombination enthaltenen Herbiziden (A) und (B), gegebenenfalls in Gegenwart von Safenern, tolerant sind, ausgenommen die Verwendung von Herbizidkombinationen

a) aus Verbindung (A1) in Kombination mit der Verbindung Propaquizafop,

b) aus einer Verbindung (A2) in Kombination mit der Verbindung Propaquizafop oder Trifluralin.

**2.** Verwendung nach Anspruch 1, **dadurch gekennzeichnet, dass** als Wirkstoff (A) Glufosinate-ammonium eingesetzt wird.

**3.** Verwendung nach Anspruch 1, **dadurch gekennzeichnet, dass** als Wirkstoff (A) Glyphosate-isopropylammonium eingesetzt wird.

**4.** Verwendung nach einem der Ansprüche 1 bis 3, **dadurch gekennzeichnet, dass**
als Komponente (B) ein oder mehrere Herbizide aus der Gruppe

(B0) Herbizide (A) aus der Gruppe der Herbizide (A1) bis (A4), die nicht mit dem der Komponente (A) identisch sind,
(B1) Metazachlor, Clomazone, Napropamide, Carbetamide, Dimefuron und Dimethachlor,
(B2) Quinmerac, Clopyralid, Pyridate und Eftametsulfuron-methyl,
(B3) Quizalofop-P und dessen Ester, Fenoxaprop-P und dessen Ester, Fluazifop-P und dessen Ester, Haloxyfop und Haloxyfop-P und deren Ester und
(B4) Sethoxydim, Cycloxydim und Clethodim

eingesetzt werden.

5. Verwendung nach Anspruch 2, **dadurch gekennzeichnet, dass** Glufosinate-ammonium in Kombination mit einer oder mehreren Verbindungen aus der Gruppe

(B1) Metazachlor, Trifluralin, Clomazone, Napropamide, Carbetamide, Dimefuron und Dimethachlor,
(B2) Quinmerac, Clopyralid, Pyridate und Ethematsulfuron-methyl,
(83) Quizalofop-P und dessen Ester, Fenoxaprop-P und dessen Ester, Fluazifop-P und dessen Ester, Haloxyfop und Haloxyfop-P und deren Ester und
(B4) Sethoxydim, Cycloxydim und Ctethodim

eingesetzt wird.

6. Verwendung nach einem der Ansprüche 1 bis 5, **dadurch gekennzeichnet, dass** die Herbizid-Kombinationen weiterere Pflanzenschutzmittelwirkstoffe enthält.

7. Verwendung naoh einem der Ansprüche 1 bis 6, **dadurch gekennzeichnet, dass** die Herbizid-Kombination gemeinsam mit im Pflanzenschutz üblichen Hilfsstoffen oder Formulierungshilfsmitteln eingesetzt wird.

8. Verfahren zur Bekämpfung von Schadpflanzen in toleranten Rapskulturen, **dadurch gekennzeichnet, dass** man die Herbizide der Herbizid-Kombination, definiert gemäß einem oder mehreren der Ansprüche 1 bis 5, gemeinsam oder getrennt im Vorauflauf, Nachauflauf oder im Vor- und Nachauflauf auf die Pflanzen, Pflanzenteile, Pflanzensamen oder die Anbaufläche appliziert.

9. Herbizide Zusammensetzung, **dadurch gekennzeichnet, dass** sie eine Kombination aus einem oder mehreren Herbiziden (A), definiert gemäß Anspruch 1, 2 oder 3, und einem oder mehreren Herbiziden aus der Gruppe

(B1') Metazachlor, Clomazone, Napropamide, Carbetamide, Dimefuron und Dimethachlor oder
(B2') Quinmerac, Clopyralid und Ethametsulfuron-methyl oder
(B3') Fenoxaprop-P und dessen Ester, Fluazifop-P und dessen Ester, Haloxyfop, Haloxyfop-P und deren Ester oder
(B4') Sethoxydim, Cycloxydim und Clethodim

oder einer Kombination aus mehreren Herbiziden der Gruppen (B1') bis (B4') und gegebenenfalls im Pflanzenschutz übliche Zusatzstoffe und Formulierungshilfsmittel enthält.

10. Herbizide Zusammensetzung, **dadurch gekennzeichnet, dass** sie Glufosinate-ammonium in Kombination mit einem oder mehreren Herbiziden aus der Gruppe

(B1') Metazachlor, Trifluralin, Clomazone, Napropamide, Carbetamide, Dimefuron und Dimethachlor oder
(B2') Quinmerac, Clopyralid und Ethametsulfuron-methyl oder
(B3') Fenoxaprop-P und dessen Ester, Fluazifop-P und dessen Ester, Haloxyfop, Haloxyfop-P und deren Ester oder
(B4') Sethoxydim, Cycloxydim und Clethodim

oder einer Kombination aus mehreren Herbiziden der Gruppen (B1') bis (B4') und gegebenenfalls im Pflanzenschutz übliche Zusatzstoffe und Formulierungshilfsmittel enthält.

## Claims

1. The use of herbicide combinations for controlling harmful plants in oil-seed rape crops, wherein the herbicide combination in question comprises an effective amount of

   (A) a broad-spectrum herbicide from the group of the compounds consisting of

      (A1) compounds of the formula (A1)

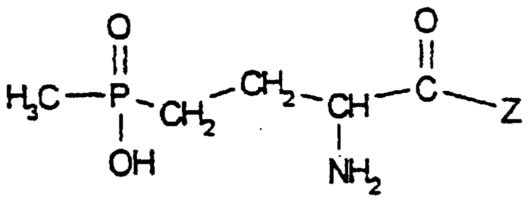

(A1)

in which Z is a radical of the formula -OH or a peptide residue of the formula $-NHCH(CH_3)CONHCH(CH_3)COOH$ or $-NHCH(CH_3)CONHCH[CH_2CH(CH_3)_2]COOH$, and its esters and salts, and other phosphinothricin derivatives,

      (A2) compounds of the formula (A2) and their esters and salts,

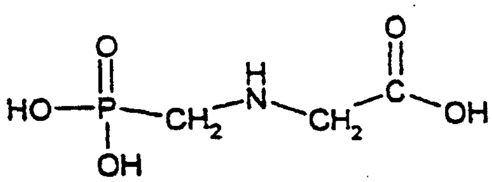

(A2)

preferably glyphosate and its alkali metal salts or salts with amines,

      (A3) imidazolinones and their salts and

      (A4) herbicidal azoles from the group of the inhibitors of protoporphrinogen oxidase (PPO inhibitors) and of the PPO inhibitor WC9717

   and

   (B) one or more herbicides from the group of the compounds consisting of

      (B0) herbicides (A) from the group of the herbicides (A1) to (A4), which are not identical to that of component (A),

      (B1) metazachlor, trifluralin, clomazone, napropamide, carbetamide, dimefuron and dimethachlor,

      (B2) quinmerac, clopyralid, pyridate and ethametsulfuron-methyl,

      (B3) quizalofop-P and its esters, fenoxaprop-P and its esters, fluazifop-P and its esters, haloxyfop and haloxyfop-P and their esters and propaquizafop and

      (B4) sethoxydim, cycloxydim and clethodim

   and the oil-seed rape crops tolerate the herbicides (A) and (B) which are present in the combination, if appropriate in the presence of safeners, with the exception of the use of herbicide combinations

   a) of compound (A1) in combination with the compound propaquizafop,

   b) of a compound (A2) in combination with the compound propaquizafop or trifluralin.

2. The use as claimed in claim 1, wherein glufosinate-ammonium is employed as active ingredient (A).

3. The use as claimed in claim 1, wherein glyphosate-isopropyl-ammonium is employed as active ingredient (A).

**4.** The use as claimed in any of claims 1 to 3, wherein one or more herbicides from the group

(B0) herbicides (A) from the group of the herbicides (A1) to (A4) which are not identical to that of component (A),
(B1) metazachlor, clomazone, napropamide, carbetamide, dimefuron and dimethachlor,
(B2) quinmerac, clopyralid, pyridate and ethametsulfuron-methyl,
(B3) quizalofop-P and its esters, fenoxaprop-P and its esters, fluazifop-P and its esters, haloxyfop and haloxyfop-P and their esters and
(B4) sethoxydim, cycloxydim and clethodim

are employed as component (B).

**5.** The use as claimed in claim 2, wherein glufosinate-ammonium is employed in combination with one or more compounds from the group

(B1) metazachlor, trifluralin, clomazone, napropamide, carbetamide, dimefuron and dimethachlor,
(B2) quinmerac, clopyralid, pyridate and ethametsulfuron-methyl,
(B3) quizalofop-P and its esters, fenoxaprop-P and its esters, fluazifop-P and its esters, haloxyfop and haloxyfop-P and their esters and
(B4) sethoxydim, cycloxydim and clethodim.

**6.** The use as claimed in any of claims 1 to 5, wherein the herbicide combinations comprise further active ingredients used in crop protection.

**7.** The use as claimed in any of claims 1 to 6, wherein the herbicide combination is used jointly with auxiliaries conventionally used in crop protection or formulation aids.

**8.** A method of controlling harmful plants in tolerant oil-seed rape crops, which comprises applying the herbicides or herbicide combination as defined in one or more of claims 1 to 5 jointly or separately, pre-emergence, post-emergence or pre- and post-emergence to the plants, plant organs, plant seeds or the area under cultivation.

**9.** Herbicidal composition which comprises a combination of one or more herbicides (A) as defined in claim 1, 2 or 3 and one or more herbicides from the group

(B1') metazachlor, clomazone, napropamide, carbetamide, dimefuron and dimethachlor or
(B2') quinmerac, clopyralid and ethametsulfuron-methyl or
(B3') fenoxaprop-P and its esters, fluazifop-P and its esters, haloxyfop, haloxyfop-P and their esters or
(B4') sethoxydim, cycloxydim and clethodim
or a combination of more than one herbicide of groups (B1') to (B4') and, if appropriate, additives and formulation aids conventionally used in crop protection.

**10.** Herbicidal composition which comprises glufosinate-ammonium in combination with one or more herbicides from the group

(B1') metazachlor, trifluralin, clomazone, napropamide, carbetamide, dimefuron and dimethachlor or
(B2') quinmerac, clopyralid and ethametsulfuron-methyl or
(B3') fenoxaprop-P and its esters, fluazifop-P and its esters, haloxyfop, haloxyfop-P and their esters or
(B4') sethoxydim, cycloxydim and clethodim

or a combination of more than one herbicide of the groups (B1') to (B4') and, if appropriate, formulation aids and additives conventionally used in crop protection.

## Revendications

**1.** Utilisation de combinaisons d'herbicides pour la lutte contre les plantes nuisibles dans les cultures de colza, **caractérisée en ce que** la combinaison d'herbicides respective présente une teneur efficace en

(A) un herbicide à large spectre dans le groupe des composés, qui est constitué de

(A1) composés des formules (A1),

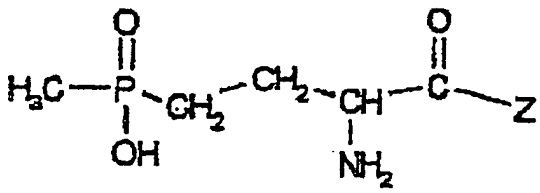

(A1)

dans laquelle Z représente un groupe de formule -OH ou un résidu peptidique de formule -NHCH($CH_3$)CONHCH($CH_3$)COOH ou -NHCH($CH_3$)CONHCH[$CH_2$CH($CH_3$)$_2$]COOH, et de leurs esters et sels et autres dérivés phosphinothricine,

(A2) composés de formule (A2) et leurs esters et sels,

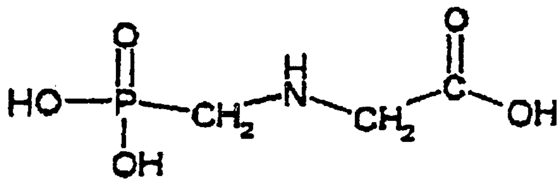

(A2)

de préférence le Glyphosate et ses sels de métaux alcalins ou ses sels avec des amines,

(A3) imidazolinones et ses sels et

(A4) azoles herbicides dans le groupe des inhibiteurs de la protoporphyrinogène-oxydase (inhibiteurs de PPO) et de l'inhibiteur de PPO WC9717,

et

(B) un ou plusieurs herbicides dans le groupe des composés, qui est constitué de

(B0) herbicides (A) dans le groupe des herbicides (A1) à (A4), qui ne sont pas identiques à celui du composant (A),

(B1) Métazachlore, Trifluraline, Clomazone, Napropamide, Carbétamide, Diméfuron et Diméthachlor,

(B2) Quinmérac, Clopyralid, Pyridate et Ethametsulfuron-méthyle,

(B3) Quizalofop-P et son ester, Fénoxaprop-P et son ester, Fluazifop-P et son ester, Haloxyfop et Haloxyfop-P et leur ester et Propaquizafop et

(B4) Séthoxydime, Cycloxydime et Cléthodime,

et **en ce que** les cultures de colza sont tolérantes, éventuellement en présence d'antidotes, vis à vis des herbicides (A) et (B) contenus dans la combinaison,
à l'exception de l'utilisation de combinaisons d'herbicides

a) du composé (A1) en combinaison avec le composé Propaquizafop,
b) d'un composé (A2) en combinaison avec le composé Propaquizafop ou Trifluraline.

**2.** Utilisation selon la revendication 1, **caractérisée en ce qu'**on utilise comme substance active (A) le Glufosinate-ammonium.

**3.** Utilisation selon la revendication 1, **caractérisée en ce qu'**on utilise comme substance active (A) le Glyphosate-isopropylammonium.

**4.** Utilisation selon une des revendications 1 à 3, **caractérisée en ce qu'**on utilise comme composant (B) un ou plusieurs herbicides dans le groupe

(B0) des herbicides (A) dans le groupe des herbicides (A1) à (A4), qui ne sont pas identiques avec celui du composant (A),

(B1) Métazachlore, Clomazone, Napropamide, Carbétamide, Diméfuron et Diméthachlor,
(B2) Quinmérac, Clopyralid, Pyridate et Ethametsulfuron-méthyle,
(B3) Quizalofop-P et son ester, Fénoxaprop-P et son ester, Fluazifop-P et son ester, Haloxyfop et Haloxyfop-P et leur ester et
(B4) Séthoxydime, Cycloxydime et Cléthodime.

5. Utilisation selon la revendication 2, **caractérisée en ce qu'**on utilise le Glufosinate-ammonium en combinaison avec un ou plusieurs composés dans le groupe

(B1) Métazachlore, Trifluarine, Clomazone, Napropamide, Carbétamide, Diméfuron et Diméthachlor,
(B2) Quinmérac, Clopyralid, Pyridate et Ethametsulfuron-méthyle,
(B3) Quizalofop-P et son ester, Fénoxaprop-P et son ester, Fluazifop-P et son ester, Haloxyfop et Haloxyfop-P et leur ester et
(B4) Séthoxydime, Cycloxydime et Cléthodime.

6. Utilisation selon une des revendications 1 à 5, **caractérisé en ce que** les combinaisons d'herbicides contiennent d'autres substances phytosanitaires actives.

7. Utilisation selon une des revendications 1 à 6, **caractérisée en que** la combinaison d'herbicides est utilisée conjointement avec des additifs ou des adjuvants de formulation usuels.

8. Procédé de lutte contre les plantes nuisibles dans des cultures de colza tolérantes, **caractérisé en ce qu'**on applique les herbicides de la combinaison d'herbicides, définie selon une ou plusieurs des revendications 1 à 5, conjointement ou séparément en prélevée, post-levée ou un pré- et post-levée sur les plantes, des parties de plantes, les semences des plantes ou la surface cultivable.

9. Composition herbicide, **caractérisée en ce qu'**elle contient une combinaison d'un ou de plusieurs herbicides (A), définis selon la revendication 1, 2 ou 3, et un ou plusieurs herbicides dans le groupe

(B1') Métazachlore, Clomazone, Napropamide, Carbétamide, Diméfuron et Diméthachlor ou
(B2') Quinmérac, Clopyralid et Ethametsulfuron-méthyle ou
(B3') Fénoxaprop-P et son ester, Fluazifop-P et son ester, Haloxyfop et Haloxyfop-P et leur ester ou
(B4) Séthoxydime, Cycloxydime et Cléthodime

ou une combinaison de plusieurs herbicides des groupes (B1') à (B4') et éventuellement des additifs et des adjuvants de formulation usuels dans la protection des plantes.

10. Composition herbicide, **caractérisée en ce qu'**elle contient le Glufosinate-ammonium en combinaison avec un ou plusieurs herbicides du groupe

(B1') Métazachlore, Trifluraline, Clomazone, Napropamide, Carbétamide, Diméfuron et Diméthachlor ou
(B2') Quinmérac, Clopyralid et Ethametsulfuron-méthyle ou
(B3') Fénoxaprop-P et son ester, Fluazifop-P et son ester, Haloxyfop et Haloxyfop-P et leur ester ou
(B4) Séthoxydime, Cycloxydime et Cléthodime

ou une combinaison de plusieurs herbicides des groupes (B1') à (B4') et éventuellement des additifs et des adjuvants de formulation usuels dans la protection des plantes.